# EUROPÄISCHE PATENTSCHRIFT

(11) **EP 3 608 235 B1**
(45) Veröffentlichungstag und Bekanntmachung des Hinweises auf die Patenterteilung: **02.02.2022**
(21) Anmeldenummer: 19188787.6
(22) Anmeldetag: 29.07.2019
(51) Int. Cl.: B65B 9/04, B65B 7/28, B65B 7/16, B65B 31/02, B29C 65/00

(54) **SIEGELWERKZEUG FÜR EINE VERPACKUNGSMASCHINE**
SEAL TOOL FOR A PACKAGING MACHINE
OUTIL POUR SCELLER POUR UNE MACHINE D'EMBALLAGE

(30) Priorität: 09.08.2018 DE 102018213431
(43) Veröffentlichungstag der Anmeldung: 12.02.2020
(73) Patentinhaber: MULTIVAC Sepp Haggenmüller SE & Co. KG, 87787 Wolfertschwenden (DE)
(72) Erfinder: MADER, Andreas, 87463 Dietmannsried (DE); SCHRADE, Peter, 72574 Bad Urach (DE); ICKERT, Lars, 87437 Kempten (DE)
(74) Vertreter: Grünecker Patent- und Rechtsanwälte PartG mbB

(56) Entgegenhaltungen:
- EP-A1- 2 345 527
- EP-A2- 2 112 070
- WO-A1-2018/093700
- DE-A1- 2 852 727
- DE-A1- 3 404 451
- DE-A1-102011 105 513
- DE-A1-102012 006 696

## Beschreibung

Die vorliegende Erfindung betrifft das Verschließen einer Produktverpackung durch siegelndes Verbinden eines ersten Verpackungsteils mit einem zweiten Verpackungsteil in einem Siegelwerkzeug.

Aus der Praxis sind beispielsweise Tiefziehverpackungsmaschinen bekannt, bei denen eine Unterfolienbahn entlang einer Transportrichtung nacheinander unterschiedlichen Verarbeitungsstationen zugeführt wird. Zunächst werden in einer Formstation durch Tiefziehen Verpackungsmulden in der Unterfolienbahn ausgebildet. In die Verpackungsmulden werden anschließend entlang einer Einlegestrecke zu verpackende Produkte eingelegt. In einer darauffolgenden Siegelstation werden die befüllten Verpackungsmulden durch Ansiegeln einer Oberfolie verschlossen. Dies kann unter Vakuum oder unter Schutzgasatmosphäre geschehen, um beispielsweise die Haltbarkeit beim Verpacken von Lebensmittelprodukten zu erhöhen.

Zudem sind Schalenverschließmaschinen bekannt, bei denen die zu befüllenden Verpackungsschalen ("Trays") der Verpackungsmaschine bereits vorgefertigt zugeführt werden. Beispielsweise können die Verpackungsschalen durch eine geeignete Abstapelvorrichtung auf ein Förderband der Verpackungsmaschine abgestapelt werden. Sie werden dann zu einer Einlegestrecke gefördert, wo sie mit zu verpackenden Produkten befüllt werden. Anschließend werden die befüllten Verpackungsschalen in einer Siegelstation durch Anbringen einer Oberfolie verschlossen.

Aus der DE 10 2011 105 513 A1 ist ein Siegelwerkzeug für eine Schalenverschließmaschine bekannt. Das Siegelwerkzeug umfasst ein Siegelwerkzeugoberteil und ein unter diesem liegendes Siegelwerkzeugunterteil mit einer Aufnahme für eine zu verschließende Schale. Das Siegelwerkzeugoberteil umfasst ein Außenteil und ein bezüglich einer vertikalen Richtung in dem Außenteil bewegliches Innenteil. Mittels eines Spindeltriebs kann das Siegelwerkzeugunterteil mit der darin aufgenommenen Verpackungsschale nach oben auf das Siegelwerkzeugoberteil zubewegt werden. Zuerst fährt das Siegelwerkzeugunterteil gegen einen über Federelemente an dem Außenteil des Siegelwerkzeugoberteils aufgehängten Klemmrahmen, wodurch die Oberfolie zwischen Siegelwerkzeugoberteil und Siegelwerkzeugunterteil eingeklemmt wird. Wird das Siegelwerkzeugunterteil noch weiter nach oben gefahren, fährt es gegen eine beheizte Siegelkante des Innenteils des Siegelwerkzeugoberteils, so dass ein Flansch der Verpackungsschale und die Oberfolie zwischen der Siegelkante und einer Siegelfläche des Siegelwerkzeugunterteils eingeklemmt werden. Beim weiteren Anheben des Siegelwerkzeugunterteils wird das Innenteil des Siegelwerkzeugoberteils entgegen dem Druck einer zwischen dem Innenteil und dem Außenteil des Siegelwerkzeugoberteils vorliegenden Feder innerhalb des Außenteils des Siegelwerkzeugoberteils bis in einen Anschlag nach oben geschoben. Hierbei wird der Siegeldruck zum siegelnden Verbinden der Oberfolie mit dem Flansch der Verpackungsschale aufgebracht. Zudem wird beim Hochfahren des Siegelwerkzeugunterteils die Verpackung mittels eines fest an dem Außenteil des Siegelwerkzeugoberteils angebrachten Messers aus dem Folienverbund ausgeschnitten. Nachteilig an diesem System ist, dass sich die Siegelkraft nur mit beträchtlichem Aufwand individuell an den jeweiligen Siegelprozess anpassen lässt. Zudem ist die Siegelkraft nicht genau definiert und kann auch entlang des Umfangs der Siegelnaht variieren, was zu Schwachstellen der Siegelung führen kann.

Die DE 10 2010 004 635 A1 beschreibt ein Siegelwerkzeug für eine Tiefziehverpackungsmaschine. Das Siegelwerkzeug umfasst ein Siegelwerkzeugunterteil mit einer Aufnahme für die befüllte Verpackungsmulde. Zudem ist ein Siegelwerkzeugoberteil vorgesehen, welches ein Außenteil und ein darin vertikal bewegliches Innenteil mit der eigentlichen Siegelkante umfasst. Bei einem Siegelvorgang wird zunächst das Siegelwerkzeugunterteil angehoben und das Siegelwerkzeugoberteil abgesenkt, um einen die Verpackungsmulde umgebenden Bereich der Unterfolie sowie die Oberfolie dazwischen einzuklemmen. Anschließend wird ein mittels einer ringförmigen Dichtung abgedichteter Raum zwischen dem Innenteil und dem Außenteil des Siegelwerkzeugoberteils mit Druckluft beaufschlagt, so dass sich das Innenteil innerhalb des Außenteils nach unten bewegt und sich somit die erwärmte Siegelkante an die Verpackung anlegt und einen entsprechenden Siegeldruck aufbaut. Das Innenteil des Siegelwerkzeugoberteils ist am Außenteil mit Zugfedern oder Druckfedern aufgehängt, um das Abwärtsbewegen des Innenteils innerhalb des Außenteils durch Druck in der Druckkammer zu ermöglichen. Der resultierende Siegeldruck ergibt sich daher aus einem Zusammenspiel des in der Druckkammer aufgebauten Drucks und dem Gegendruck der Zugfedern oder Druckfedern. Somit kann es sich auch bei diesem System als schwierig erweisen, einen gut definiert und gleichmäßig verteilten Siegeldruck einzustellen.

Die DE 10 2012 006 696 A1 beschreibt eine Tiefziehverpackungsmaschine mit einer Siegelstation, welche über eine verschließbare Kammer verfügt, in der die Atmosphäre in den Mulden vor dem Versiegeln z. B. durch Gasspülen mit einem Austauschgas oder mit einem Gasgemisch ersetzt werden kann. Die Siegelstation umfasst ein Siegelwerkzeugunterteil und ein Siegelwerkzeugoberteil. In einer geschlossenen Stellung der Siegelstation bildet das Siegelwerkzeugunterteil mit dem Siegelwerkzeugoberteil eine geschlossene Kammer, um die Kammer und damit auch das Innere der Mulde evakuieren oder begasen zu können. Nach dem Evakuier- oder Begasungsprozess werden außerhalb der Kammer vorgesehene Aktoren aktiviert, um in dem Siegelwerkzeugoberteil vorgesehene Siegelplatten gegen die Folien bzw. gegen das Siegelwerkzeugunterteil zu bewegen und eine Siegelkraft zu erzeugen. Die Kräfte sind mittels Drücken in Membranen der Aktoren einstellbar.

Es ist Aufgabe der Erfindung, eine möglichst genaue und reproduzierbare Einstellbarkeit eines Siegeldrucks beim siegelnden Verschließen einer Verpackung in einem Siegelwerkzeug zu erreichen.

Diese Aufgabe wird jeweils durch den Gegenstand der Ansprüche 1 und 15 gelöst. Die abhängigen Ansprüche geben vorteilhafte Weiterbildungen der Erfindung an.

Die Erfindung stellt ein Siegelwerkzeug zum Verschließen einer Verpackung durch siegelndes Verbinden eines ersten Verpackungsteils mit einem zweiten Verpackungsteil bereit. Bei dem ersten Verpackungsteil kann es sich beispielsweise um vorgefertigte Verpackungsschalen oder in einer Folienbahn ausgebildete Verpackungsmulden handeln. Der zweite Verpackungsteil kann beispielsweise eine Oberfolie umfassen. Das Siegelwerkzeug umfasst ein Siegelwerkzeugoberteil und ein unter dem Siegelwerkzeugoberteil angeordnetes Siegelwerkzeugunterteil. Das Siegelwerkzeugoberteil weist eine Siegelkante zum siegelnden Zusammenwirken mit einer Siegelfläche des Siegelwerkzeugunterteils auf. Zudem umfasst das Siegelwerkzeug einen Hubantrieb, der dazu konfiguriert ist, das Siegelwerkzeugunterteil entlang einer vertikalen Richtung von einer Aufnahmeposition in eine Siegelposition zu bewegen. In der Aufnahmeposition sind der erste Verpackungsteil und der zweite Verpackungsteil zwischen das Siegelwerkzeugunterteil und das Siegelwerkzeugoberteil einbringbar. In der Siegelposition wirken das Siegelwerkzeugunterteil und das Siegelwerkzeugoberteil zum siegelnden Verbinden des ersten Verpackungsteils mit dem zweiten Verpackungsteil zusammen. Um das Siegeln zu erleichtern, kann beispielsweise die Siegelfläche und/oder die Siegelkante beheizbar sein. Es wäre aber auch denkbar, dass der erste und/oder der zweite Verpackungsteil bereits vor dem Siegeln ausreichend erwärmt wurden.

Das Siegelwerkzeugoberteil umfasst ein Außenteil und ein in dem Außenteil angeordnetes Innenteil. Das Außenteil ist bezüglich der vertikalen Richtung relativ zu dem Innenteil beweglich. Das Innenteil des Siegelwerkzeugoberteils umfasst ein oberes Innenteil und ein bezüglich der vertikalen Richtung relativ zu dem oberen Innenteil bewegliches unteres Innenteil, an welchem die Siegelkante vorgesehen ist. In dem oberen Innenteil ist eine von einer Membran nach unten begrenzte Druckkammer ausgebildet. In der Siegelposition wird das untere Innenteil gegen die Membran gedrückt, so dass ein Siegeldruck aufgebracht wird.

Wird das Siegelwerkzeugunterteil durch den Hubantrieb in die Siegelposition angehoben, drückt es das untere Innenteil gegen die Membran. Der resultierende Siegeldruck ergibt sich ausschließlich basierend auf dem in der Druckkammer vorliegenden Druck und ist somit reproduzierbar und einfach einstellbar. Da die Druckkammer in dem oberen Innenteil des Siegelwerkzeugoberteils ausgebildet ist, ist der Siegeldruck unabhängig von der Relativposition zwischen dem Innenteil und dem Außenteil des Siegelwerkzeugoberteils in der Siegelposition.

Durch die Kraftübertragung über die Membran verteilt sich die Siegelkraft besonders gleichmäßig entlang der Siegelkante.

Vorzugsweise ist ein Druckregulator vorgesehen, welcher zum Einstellen des Drucks in der Druckkammer konfiguriert ist. Der Siegeldruck kann so von Anwendung zu Anwendung individuell angepasst werden. Es ist auch denkbar, dass mittels des Druckregulators nach Erreichen der Siegelposition der Druck in der Druckkammer erhöht wird, um einen höheren Siegeldruck zu erreichen. Wenn der höhere Druck erst nach Erreichen der Siegelposition angelegt wird, arbeitet dieser nicht gegen das Anheben des Siegelwerkzeugunterteils in die Siegelposition, so dass der Hubantrieb weniger belastet wird.

Der Hubantrieb kann beispielsweise einen Spindeltrieb oder einen Kniehebelantrieb umfassen. Ein Kniehebelantrieb ist besonders geeignet, wenn er so betrieben wird, dass er in der Siegelposition seinen Totpunkt erreicht, in welchem er gegen den Siegeldruck stabilisiert ist.

Vorzugsweise ist das obere Innenteil des Siegelwerkzeugoberteils ortsfest. Wenn das obere Innenteil ortsfest ist, ist auch die darin vorgesehene Druckkammer ortsfest. Die Reproduzierbarkeit von Siegelergebnissen ist dann unabhängig von einer relativen Lage zwischen dem Innenteil und dem Außenteil des Siegelwerkzeugoberteils. Zudem kann der ortsfeste obere Innenteil des Siegelwerkzeugoberteils besonders gut in seiner Lage und Position stabilisiert sein.

Vorzugsweise ist das untere Innenteil für die Bewegung entlang der vertikalen Richtung relativ zu dem oberen Innenteil allenfalls mit Spiel geführt. Dieses Spiel sorgt dafür, dass sich der Siegeldruck gleichmäßig entlang der Siegelkante verteilt.

Vorzugsweise kann das untere Innenteil zumindest in einem begrenzten Winkelbereich eine Kippbewegung durchführen. Auch dies sorgt für ein freies und gleichmäßiges Verteilen des Siegeldrucks entlang der Siegelkante.

Das untere Innenteil kann ein Kopfelement umfassen, welches zumindest teilweise in einer Aufnahmekammer aufgenommen ist, die in dem oberen Innenteil unterhalb der Druckkammer vorliegt. Das Kopfelement kann dazu ausgelegt sein, in der Siegelposition gegen die Membran gedrückt zu werden und somit den Siegeldruck zu übertragen.

Vorzugsweise ist das Kopfelement zumindest im Wesentlichen pilzförmig ausgebildet. Das kann heißen, dass das Kopfelement einen Stielbereich und einen verglichen mit dem Stielbereich verbreiteten Kopfbereich aufweist. Der Stielbereich kann durch eine nach unten gerichtete Öffnung aus der Aufnahmekammer ragen. Der breitere Kopfbereich kann durch Wände der Aufnahmekammer, die die Öffnung begrenzen, in der Aufnahmekammer gehalten werden. Bei einer solchen Ausgestaltung ist keine zusätzliche Führung des Kopfelements erforderlich, so dass sich dessen Lage relativ frei an die vorherrschenden Druckverhältnisse anpassen kann und somit eine gleichmäßige Übertragung des Siegeldrucks erfolgt. Durch den Kopfbereich ist das Kopfelement gegen ein Herausfallen aus der Aufnahmekammer gesichert.

Gemäß einer Ausführungsform umfasst das untere Innenteil zudem ein unter dem Kopfelement angeordnetes Zwischenelement und ein unter dem Zwischenelement angeordnetes Endelement, welches die Siegelkante umfasst. Das Kopfelement, das Zwischenelement und das Endelement können bezüglich der vertikalen Richtung relativ zueinander beweglich sein. Prinzipiell wäre es aber auch denkbar, dass zwei oder alle Elemente des unteren Innenteils, also das Kopfelement, das Zwischenelement und/oder das Endelement, miteinander einstückig ausgebildet sind. Ist zumindest das Kopfelement separat ausgebildet, wird die Siegelkraft jedoch im allgemeinen gleichmäßiger übertragen.

Vorzugsweise ist an dem unteren Innenteil des Siegelwerkzeugoberteils ein Schneidmesser zum Schneiden der Verpackung entlang eines Verpackungsumrisses während des Siegelns vorgesehen. Somit ist es nicht notwendig, eine separate Schneidstation vorzusehen. Das Ausschneiden der Oberfolie kann ohne zusätzlichen Aufwand beim Siegeln gleich miterledigt werden. Das Schneidmesser kann beispielsweise fest oder beweglich an dem Zwischenelement des unteren Innenteils angebracht sein.

Vorzugsweise ist nur an einzelnen Positionen entlang eines Umfangs des Schneidmessers jeweils ein Führungselement zwischen einer Innenseite des Schneidmessers und dem Innenteil, insbesondere dem Endelement des unteren Innenteils, vorgesehen. Dadurch, dass die Führungselemente nur an einzelnen Positionen, und nicht umlaufend, vorgesehen sind, hat das Innenteil Spiel, um sich an vorliegende Druckverhältnisse anzupassen.

Gemäß einer Ausführungsform ist das Schneidmesser gegen ein Spannelement nach oben auf das Zwischenelement zu bewegbar. In diesem Fall kann das Messer insbesondere in der Aufnahmeposition weiter nach unten ragen als das Endelement des unteren Innenteils. Alternativ wäre es beispielsweise denkbar, dass das Endelement gegen ein Spannelement nach oben auf das Zwischenelement zu bewegbar ist. In diesem Fall könnte das Endelement nach unten über das Schneidmesser hinausragen. Insbesondere könnte das Schneidmesser fest an dem Zwischenelement angebracht sein.

Vorzugsweise ist nur an einzelnen Positionen entlang des Umfangs des Siegelwerkzeugoberteils jeweils ein Führungselement zwischen einer Innenwand des Außenteils und dem Innenteil und/oder dem Schneidmesser vorgesehen. Das Innenteil kann seine Lage aufgrund der Führung nur an einzelnen Positionen gut an momentan vorliegende Druckverhältnisse anpassen.

Vorzugsweise führen die Führungselemente das Innenteil gegenüber dem Außenteil mit Spiel.

Die Erfindung betrifft auch eine Verpackungsmaschine mit dem beschriebenen Siegelwerkzeug. Prinzipiell ist es ausreichend, wenn die Verpackungsmaschine ein einziges solches Siegelwerkzeug umfasst. Vorzugsweise umfasst die Verpackungsmaschine jedoch mehrere solcher Siegelwerkzeuge, so dass mehrere Verpackungen gleichzeitig bearbeitet werden können. Im Fall mehrerer Siegelwerkzeuge sind die Druckkammern der Siegelwerkzeuge vorzugsweise derart miteinander verbunden, dass ein Druckausgleich zwischen den Druckkammern stattfindet. So wird erreicht, dass bei den gleichzeitig verarbeiteten Verpackungen jeweils der gleiche Siegeldruck vorliegt. Bei der Verpackungsmaschine handelt es sich insbesondere um eine Tiefziehverpackungsmaschine oder eine Schalenverschließmaschine.

Die Erfindung betrifft auch ein Verfahren zum Verpacken von Produkten mit dem beschriebenen Siegelwerkzeug oder der beschriebenen Verpackungsmaschine. Gemäß dem Verfahren werden ein erster Verpackungsteil und ein zweiter Verpackungsteil in der Aufnahmeposition zwischen das Siegelwerkzeugunterteil und das Siegelwerkzeugoberteil eingebracht. Mittels des Hubantriebs wird das Siegelwerkzeugunterteil von der Aufnahmeposition in die Siegelposition bewegt. Hierbei fährt das Siegelwerkzeugunterteil zunächst gegen das Außenteil des Siegelwerkzeugoberteils und schiebt dieses gegen eine Vorspannung vertikal nach oben. Anschließend fährt das Siegelwerkzeugunterteil gegen das untere Innenteil des Siegelwerkzeugoberteils und drückt dieses gegen die die Druckkammer nach unten begrenzende Membran.

Vorzugsweise wird nach Erreichen der Siegelposition der Druck in der Druckkammer aktiv erhöht.

Im Folgenden soll die Erfindung anhand von Ausführungsbeispielen unter Bezugnahme auf die Figuren weiter erläutert werden. Es zeigt:
- Figur 1: eine schematische Draufsicht auf eine Verpackungsmaschine mit zwei Siegelwerkzeugen gemäß einer Ausführungsform;
- Figur 2: eine Abfolge zeitlich nacheinander folgender Betriebszustände beim Betrieb eines Siegelwerkzeugs gemäß einer Ausführungsform in Schnittansicht durch das Siegel-werkzeug; und
- Figur 3: unterschiedliche beispielhafte Varianten der Anbringung des Schneidmessers an dem unteren Innenteil des Siegelwerkzeugoberteils.

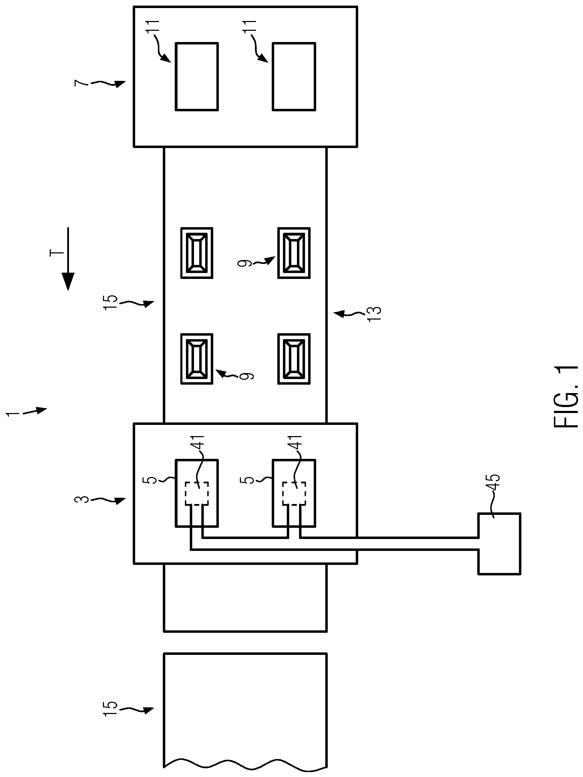

Figur 1 zeigt in schematischer Draufsicht eine Verpackungsmaschine 1 mit einer Siegelstation 3, die zwei erfindungsgemäße Siegelwerkzeuge 5 umfasst. In der gezeigten Variante handelt es sich bei der Verpackungsmaschine 1 um eine Schalenverschließmaschine. Es wäre aber auch denkbar, die Siegelwerkzeuge 5 in einer anderen Verpackungsmaschine 1, insbesondere einer Tiefziehverpackungsmaschine einzusetzen.

Die Verpackungsmaschine 1 umfasst eine Abstapeleinrichtung 7 zum Abstapeln vorgefertigter Verpackungsschalen 9 aus Schalenstapeln 11 auf ein Förderband 13. Das Förderband 13 fördert die Verpackungsschalen 9 entlang einer Transportrichtung T in einen Einlegebereich 15, wo die Verpackungsschalen 9 automatisch oder manuell mit zu verpackenden Produkten befüllt werden. Anschließend werden die befüllten Verpackungsschalen 9 weiter zu der Siegelstation 3 gefördert. Dort werden die Verpackungsschalen 9 durch Ansiegeln einer Oberfolie 21 verschlossen. Anschließend können die fertigen Verpackungen über ein weiteres Förderband 15 abgeführt werden.

Die in Figur 1 dargestellte Verpackungsmaschine 1 umfasst zwei Spuren, auf denen Verpackungen parallel verarbeitet werden. Demnach umfasst die Siegelstation 3 auch zwei parallel arbeitende Siegelwerkzeuge 5. Es wäre aber auch denkbar, dass die Verpackungsmaschine 1 lediglich eine Spur und damit z. B. ein Siegelwerkzeug 5 aufweist oder dass mehr als zwei Siegelwerkzeuge 5 vorgesehen sind.

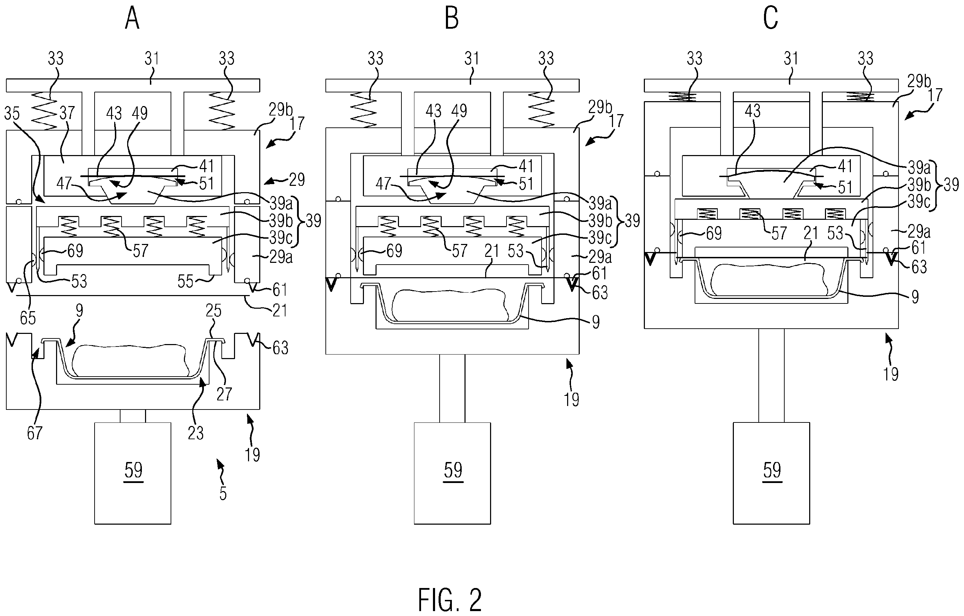

Figur 2 zeigt in Schnittansicht durch ein Siegelwerkzeug 5 eine Abfolge von in einem Siegelvorgang zeitlich aufeinanderfolgenden Betriebszuständen des Siegelwerkzeugs 5. Das Siegelwerkzeug 5 umfasst ein Siegelwerkzeugoberteil 17 und ein Siegelwerkzeugunterteil 19, welche zum Verschließen einer Verpackung durch siegelndes Verbinden einer Verpackungsschale 9 (erstes Verpackungsteil) mit einer Oberfolie 21 (zweites Verpackungsteil) zusammenwirken. Das Siegelwerkzeugunterteil 19 umfasst eine Schalenaufnahme 23 zum Aufnehmen der befüllten Verpackungsschale 9. Ein Flansch 25 der Verpackungsschale 9 liegt umlaufend auf einer Siegelfläche 27 des Siegelwerkzeugunterteils 19 auf.

Das Siegelwerkzeugoberteil 17 umfasst ein Außenteil 29, welches in der gezeigten Ausführungsform zweiteilig (unteres Außenteil 29a und oberes Außenteil 29b) ausgebildet ist, aber auch einstückig sein könnte. Das Außenteil 29 ist gegenüber einer fixen Struktur 31 gegen die Vorspannung eines Vorspannelements 33 vertikal nach oben verschiebbar vorgesehen. In der gezeigten Ausführungsform ist zudem das untere Teil 29a des Außenteils 29 gegenüber dem oberen Teil 29b des Außenteils 29 nach oben verschiebbar, bis es gegen das obere Teil 29b des Außenteils 29 fährt.

Das Siegelwerkzeugoberteil 17 umfasst zudem ein Innenteil 35, welches in dem Außenteil 29 angeordnet ist. Das Innenteil 35 umfasst ein oberes Innenteil 37, das fest an der fixen Struktur 31 angebracht ist, also ortsfest ist. Zudem umfasst das Innenteil 35 ein unteres Innenteil 39, welches in der gezeigten Ausführungsform dreiteilig ausgebildet ist. Das untere Innenteil 39 umfasst ein Kopfelement 39a, ein unter diesem angeordnetes Zwischenelement 39b und ein unter dem Zwischenelement 39b angeordnetes Endelement 39c. Das untere Innenteil 39 ist entlang der vertikalen Richtung relativ zu dem oberen Innenteil 37 beweglich. Zudem sind in der gezeigten Ausführungsform das Kopfelement 39a, das Zwischenelement 39b und das Endelement 39c entlang der vertikalen Richtung relativ zueinander beweglich.

In dem oberen Innenteil 37 ist eine Druckkammer 41 vorgesehen, die von einer Membran 43 nach unten hin begrenzt ist. Wie in Figur 1 dargestellt, ist die Druckkammer 41 mit einem Druckregulator 45 verbunden, welcher den Druck in der Druckkammer 41 einstellen kann. Wenn mehrere Siegelwerkzeuge 5 vorgesehen sind, sind die Druckkammern 41 der Siegelwerkzeuge 5 jeweils untereinander verbunden, so dass ein Druckausgleich zwischen den Druckkammern 41 stattfindet.

Das Kopfelement 39a des unteren Innenteils 39 ist im Wesentlichen pilzförmig ausgebildet und umfasst einen Stielbereich 47 und einen verglichen mit dem Stielbereich 47 verbreitert ausgebildeten Kopfbereich 49. In der dargestellten Variante ist der Kopfbereich 49 in Draufsicht kreisförmig ausgebildet. Die Erfindung ist aber nicht darauf beschränkt und es sind auch andere Formen des Kopfbereichs 49 denkbar, wie beispielsweise dreieckig, rechteckig oder polygonal. Der Kopfbereich 49 ist in einer Aufnahmekammer 51 aufgenommen, die in dem oberen Innenteil 37 unterhalb der Druckkammer 41 liegt. Der Stielbereich 47 ragt durch eine nach unten gerichtete Öffnung aus der Aufnahmekammer 51. Durch die die Öffnung der Aufnahmekammer 51 begrenzenden Wände wird der verbreiterte Kopfbereich 49 in der Aufnahmekammer 51 gehalten.

Das Zwischenelement 39b des unteren Innenteils 39 ist unter dem Kopfelement 39a vorgesehen und vertikal nach oben hin auf dieses zu bewegbar. In der in Figur 2 gezeigten Ausführungsform ist ein Schneidmesser 53 zum Schneiden der Verpackung entlang eines Verpackungsumrisses während des Siegelns fest an dem Zwischenelement 39b angebracht. Das Endelement 39c des unteren Innenteils 39 ist unter dem Zwischenelement 39b vorgesehen und nach oben auf dieses zu bewegbar. Das Endelement 39c umfasst eine Siegelkante 55, die zum Bilden einer Siegelnaht mit der Siegelfläche 27 des Siegelwerkzeugunterteils 19 zusammenwirkt. Zwischen dem Zwischenelement 39b und dem Endelement 39c ist in der gezeigten Ausführungsform zumindest ein Vorspannelement 57, hier in Form von Federelementen, vorgesehen.

Das Siegelwerkzeug 5 umfasst zudem einen Hubantrieb 59, der dazu ausgelegt ist, das Siegelwerkzeugunterteil 19 entlang einer vertikalen Richtung zwischen einer Aufnahmeposition (in Teil A von Figur 2 gezeigt) und einer Siegelposition (in Teil C von Figur 2 gezeigt) zu bewegen. In der in Teil A von Figur 2 gezeigten Aufnahmeposition sind das Siegelwerkzeugunterteil 19 und das Siegelwerkzeugoberteil 17 entlang der vertikalen Richtung voneinander beabstandet. Es werden die Verpackungsschale 9 und die Oberfolie 21 zwischen dem Siegelwerkzeugunterteil 19 und dem Siegelwerkzeugoberteil 17 eingebracht. Anschließend bewegt der Hubantrieb 59 das Siegelwerkzeugunterteil 19 vertikal nach oben in eine in Teil B von Figur 2 dargestellte Zwischenposition. Hierbei fährt das Siegelwerkzeugunterteil 19 zunächst gegen den unteren Teil 29a des Außenteils 29 des Siegelwerkzeugoberteils 17. Unten an dem unteren Teil 29a des Außenteils 29 ist ein umlaufender Zentriervorsprung 61 vorgesehen, der in eine entlang eines Umfangs des Siegelwerkzeugunterteils 19 umlaufende Zentriernut 63 eingreift. Hierbei können sich das Außenteil 29 des Siegelwerkzeugoberteils 17 und das Siegelwerkzeugunterteil 19 entlang einer Horizontalen in Bezug aufeinander ausrichten, da das Außenteil 29 des Siegelwerkzeugoberteils 17 nur an bestimmten Punkten mit Führungselementen 65 gegenüber dem Schneidmesser 53 geführt ist und somit eine gewisse Freiheit zur Bewegung in einer horizontalen Ebene aufweist. Das Siegelwerkzeugunterteil 19 schiebt das untere Teil 29a des Außenteils 29 des Siegelwerkzeugoberteils 17 nach oben, bis dieses mit dem oberen Teil 29b des Außenteils 29 in Kontakt kommt. Nun bilden das Außenteil 29 des Siegelwerkzeugoberteils 17 und das Siegelwerkzeugunterteil 19 eine geschlossene Kammer, in deren Inneren sich das Innenteil 35 des Siegelwerkzeugoberteils 17 sowie die Verpackungsschale 9 mit dem darüber liegenden Bereich der Oberfolie 21 befindet. Diese Kammer kann bei Bedarf evakuiert und/oder mit Schutzgas befüllt werden.

Wird das Siegelwerkzeugunterteil 19 aus der in Teil B von Figur 2 gezeigten Zwischenposition durch den Hubantrieb 59 weiter nach oben bewegt, wird das Außenteil 29 des Siegelwerkzeugoberteils 17 gegen die Vorspannelemente 33 nach oben geschoben. Dies entspricht einer Relativbewegung zwischen dem Außenteil 29 und dem Innenteil 35 des Siegelwerkzeugoberteils 17. Schließlich fährt das Siegelwerkzeugunterteil 19 im Bereich der Siegelfläche 27 auf das Endteil 39c des Innenteils 39 des Siegelwerkzeugoberteils 17, insbesondere auf die Siegelkante 55, auf und schiebt dieses entgegen den Vorspannelementen 57 nach oben auf das Zwischenelement 39b des Innenteils 39. Bei dieser Bewegung taucht das Schneidmesser 53 in eine korrespondierende Schneidnut 67 des Siegelwerkzeugunterteils 19 ein und schneidet die Verpackung entlang eines Verpackungsumrisses. Die Bewegung des Endelements 39c des Innenteils 39 in Bezug auf das Schneidmesser 53 ist nur an einzelnen Positionen entlang eines Umfangs des Schneidmessers 53 mit Führungselementen 69 geführt. Daher hat das Endelement 39c die Freiheit, sich geeignet auszurichten.

Nachdem das Endelement 39c auf das Zwischenelement 39b gefahren ist, wird das Siegelwerkzeugunterteil 19 durch den Hubantrieb 59 weiter nach oben bis in die in Teil C von Figur 2 dargestellte Siegelposition bewegt. Hierbei fährt das Zwischenelement 39b auf das Kopfelement 39a auf und schiebt dieses gegen die Membran 43 nach oben. Vorzugsweise ist der Hubantrieb 59 als Kniehebelmechanismus ausgebildet. In diesem Fall kann die Siegelposition der Totstellung des Hubantriebs 59 entsprechen, so dass die Hubposition in der Siegelposition besonders gesichert ist.

Während des Verfahrens des Siegelwerkzeugunterteils 19 von der Aufnahmeposition in die Siegelposition kann in der Druckkammer 41 ein konstanter, durch den Druckregulator 45 eingestellter Druck vorliegen. Die in der Siegelposition auf die Siegelkante 55 wirkende Siegelkraft hängt von diesem Druck ab. Gemäß einer einfachen Ausführungsform bleibt der Druck in der Druckkammer 41 konstant. Gemäß einer anderen Ausführungsform kann der Druck nach Erreichen der Siegelposition angehoben werden, um eine höhere Siegelkraft zu erreichen. Vor dem Erhöhen des Drucks kann das Siegelwerkzeugunterteil 19 in der Siegelposition arretiert werden, so dass der Hubantrieb 59 nicht dem erhöhten Druck entgegenwirken muss. Ist der Hubantrieb 59 als Kniehebelmechanismus ausgebildet, kann das Arretieren in der Siegelposition automatisch erfolgen, wenn der Kniehebelmechanismus in der Siegelposition im Totpunkt vorliegt. Es wäre aber auch denkbar, separate Vorkehrungen zum Arretieren des Siegelwerkzeugunterteils 19 vorzusehen. Nach erfolgtem Siegeln kann das Siegelwerkzeugunterteil 19 durch den Hubantrieb 59 wieder nach unten gefahren werden, so dass die verschlossene Verpackung entnommen werden kann.

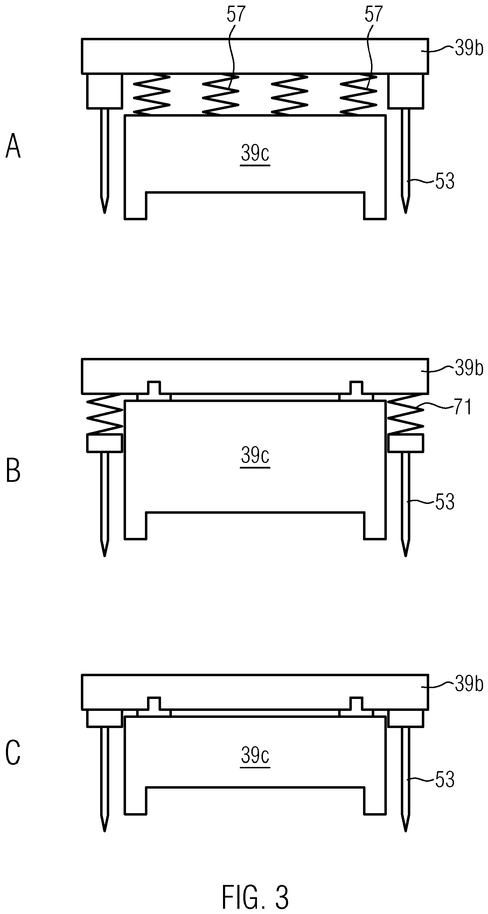

In Figur 3 sind unterschiedliche Varianten der Anbringung des Schneidmessers 53 gezeigt. Die in Teil A von Figur 3 gezeigte Variante entspricht im Wesentlichen der Situation in Figur 2. Das Schneidmesser 53 ist hier fest mit dem Zwischenelement 39b des unteren Innenteils 39 verbunden und das Endelement 39c des unteren Innenteils 39 ist gegen Vorspannelemente 57 auf das Zwischenelement 39b zu bewegbar. In der Aufnahmeposition ragt das Schneidmesser 53 nicht nach unten über das Endelement 39c hinaus.

Teil B von Figur 3 zeigt eine andere Variante, bei der das Schneidmesser 53 vertikal beweglich an dem Zwischenelement 39b angebracht ist. Das Schneidmesser 53 kann gegen die Vorspannung eines Spannelements 71 auf das Zwischenelement 39b zubewegt werden. In der Aufnahmeposition ragt das Schneidmesser 53 nach unten über das Endelement 39c hinaus.

Teil C von Figur 3 zeigt eine weitere Variante, bei der das Schneidmesser 53 fest an dem Zwischenelement 39b angebracht ist. Das Schneidmesser 53 kann in der Aufnahmeposition nach unten über das Endelement 39c hinausragen.

## Patentansprüche

1. Siegelwerkzeug (5) zum Verschließen einer Verpackung durch siegelndes Verbinden eines ersten Verpackungsteils (9) mit einem zweiten Verpackungsteil (21), umfassend:
ein Siegelwerkzeugoberteil (17) mit einem Außenteil (29) und einem in dem Außenteil (29) angeordneten Innenteil (35), wobei das Außenteil (29) bezüglich einer vertikalen Richtung relativ zu dem Innenteil (35) beweglich ist;
ein unter dem Siegelwerkzeugoberteil (17) angeordnetes Siegelwerkzeugunterteil (19) mit einer Siegelfläche (27); und
einen Hubantrieb (59), der dazu konfiguriert ist, das Siegelwerkzeugunterteil (19) entlang einer vertikalen Richtung von einer Aufnahmeposition, in welcher der erste Verpackungsteil (9) und der zweite Verpackungsteil (21) zwischen das Siegelwerkzeugunterteil (19) und das Siegelwerkzeugoberteil (17) einbringbar sind, in eine Siegelposition zum Verbinden des ersten Verpackungsteils (9) mit dem zweiten Verpackungsteil (21) durch Zusammenwirken des Siegelwerkzeugunterteils (19) und des Siegelwerkzeugoberteils (17) zu bewegen,
**dadurch gekennzeichnet, dass**
das Innenteil (35) des Siegelwerkzeugoberteils (17) ein oberes Innenteil (37) und ein bezüglich einer vertikalen Richtung relativ zu dem oberen Innenteil (37) bewegliches unteres Innenteil (39) umfasst, wobei eine Siegelkante (55) zum siegelnden Zusammenwirken mit der Siegelfläche (27) des Siegelwerkzeugunterteils (19) an dem unteren Innenteil (39) vorgesehen ist,
wobei in dem oberen Innenteil (37) eine von einer Membran (43) nach unten begrenzte Druckkammer (41) ausgebildet ist, wobei das untere Innenteil (39) in der Siegelposition gegen die Membran (43) gedrückt wird, so dass ein Siegeldruck aufgebracht wird.

2. Siegelwerkzeug nach Anspruch 1, welches zudem einen Druckregulator (45) umfasst, welcher zum Einstellen des Drucks in der Druckkammer (41) konfiguriert ist.

3. Siegelwerkzeug nach Anspruch 1 oder 2, wobei das obere Innenteil (37) ortsfest ist.

4. Siegelwerkzeug nach einem der vorangehenden Ansprüche, wobei das untere Innenteil (39) für die Bewegung entlang der vertikalen Richtung relativ zu dem oberen Innenteil (37) allenfalls mit Spiel geführt ist.

5. Siegelwerkzeug nach einem der vorangehenden Ansprüche, wobei das untere Innenteil (39) frei ist, zumindest in einem begrenzten Winkelbereich eine Kippbewegung durchzuführen.

6. Siegelwerkzeug nach einem der vorangehenden Ansprüche, wobei das untere Innenteil (39) ein Kopfelement (39a) umfasst, welches zumindest teilweise in einer Aufnahmekammer (51) aufgenommen ist, die in dem oberen Innenteil (37) unterhalb der Druckkammer (41) befindlich ist.

7. Siegelwerkzeug nach Anspruch 6, wobei das Kopfelement (39a) des unteren Innenteils (39) im Wesentlichen pilzförmig ausgebildet ist, wobei ein Stielbereich (47) des Kopfelements (39a) durch eine nach unten gerichtete Öffnung aus der Aufnahmekammer (51) ragt und ein gegenüber dem Stielbereich (47) verbreiterter Kopfbereich (49) des Kopfelements (39a) durch die Öffnung begrenzende Wände der Aufnahmekammer (51) in der Aufnahmekammer (51) gehalten wird.

8. Siegelwerkzeug nach Anspruch 6 oder 7, wobei das untere Innenteil (39) zudem ein unter dem Kopfelement (39a) angeordnetes Zwischenelement (39b) und ein unter dem Zwischenelement (39b) angeordnetes Endelement (39c) umfasst, welches die Siegelkante (55) umfasst, wobei das Kopfelement, das Zwischenelement (39b) und das Endelement (39c) bezüglich der vertikalen Richtung relativ zueinander beweglich sind.

9. Siegelwerkzeug nach Anspruch 8, wobei an dem unteren Innenteil (39) ein Schneidmesser (53) zum Schneiden der Verpackung entlang eines Verpackungsumrisses während des Siegelns vorgesehen ist.

10. Siegelwerkzeug nach Anspruch 9, wobei nur an einzelnen Positionen entlang eines Umfangs des Schneidmessers (53) jeweils ein Führungselement (69) zwischen einer Innenseite des Schneidmessers (53) und dem Innenteil (35) vorgesehen ist.

11. Siegelwerkzeug nach Anspruch 9 oder 10, wobei das Schneidmesser (53) oder das Endelement (39c) gegen ein Spannelement (57, 71) nach oben auf das Zwischenelement (39b) zu bewegbar ist.

12. Siegelwerkzeug nach einem der vorangehenden Ansprüche, wobei nur an einzelnen Positionen entlang eines Umfangs des Siegelwerkzeugoberteils (17) jeweils ein Führungselement (65) zwischen einer Innenwand des Außenteils (29) und dem Innenteil (35) vorgesehen ist, wobei die Führungselemente (65) vorzugsweise das Innenteil (35) mit Spiel gegenüber dem Außenteil (29) führen.

13. Siegelwerkzeug nach einem der vorangehenden Ansprüche, wobei das Außenteil (29) des Siegelwerkzeugoberteils (17) und das Siegelwerkzeugunterteil (19) dazu konfiguriert sind, eine geschlossene Kammer zu bilden, in deren Inneren sich das Innenteil (35) des Siegelwerkzeugoberteils (17) befindet.

14. Verpackungsmaschine (1) mit einem oder mehreren Siegelwerkzeugen (5) nach einem der vorangehenden Ansprüche, wobei im Fall mehrerer Siegelwerkzeuge (5) die Druckkammern (41) der Siegelwerkzeuge (5) miteinander verbunden sind, so dass ein Druckausgleich zwischen den Druckkammern (41) stattfindet.

15. Verfahren zum Verpacken von Produkten mit einem Siegelwerkzeug (5) nach einem der Ansprüche 1 bis 13 oder mit einer Verpackungsmaschine (1) nach Anspruch 14, umfassend:
Einbringen eines ersten Verpackungsteils (9) und eines zweiten Verpackungsteils (21) zwischen das Siegelwerkzeugunterteil (19) und das Siegelwerkzeugoberteil (17) in der Aufnahmeposition;
Bewegen des Siegelwerkzeugunterteils (19) von der Aufnahmeposition in die Siegelposition mittels des Hubantriebs (59), wobei das Siegelwerkzeugunterteil (19) zunächst gegen das Außenteil (29) des Siegelwerkzeugoberteils (17) fährt und dieses gegen eine Vorspannung vertikal nach oben schiebt, dann das Siegelwerkzeugunterteil (19) gegen das untere Innenteil (35) des Siegelwerkzeugoberteils (17) fährt und dieses gegen die die Druckkammer (41) nach unten begrenzende Membran (43) drückt.

16. Verfahren nach Anspruch 15, wobei nach Erreichen der Siegelposition der Druck in der Druckkammer (41) aktiv erhöht wird.

## Claims

1. A sealing tool (5) for closing a package by sealingly bonding a first packaging member (9) to a second packaging member (21), comprising:
an upper part (17) of the sealing tool having an outer member (29) and an inner member (35) arranged within the outer member (29), the outer member (29) being movable relative to the inner member (35) with respect to a vertical direction;
a lower part (19) of the sealing tool arranged below the upper part (17) of the sealing tool and having a sealing surface (27); and
a lifting drive (59) configured to move the lower part (19) of the sealing tool along a vertical direction from a receiving position, in which the first packaging member (9) and the second packaging member (21) can be inserted between the lower part (19) of the sealing tool and the upper part (17) of the sealing tool, to a sealing position for bonding the first packaging member (9) to the second packaging member (21) by cooperation of the lower part (19) of the sealing tool and the upper part (17) of the sealing tool,
**characterized in that**
the inner member (35) of the upper part (17) of the sealing tool comprises an upper inner member (37) and a lower inner member (39) movable relative to the upper inner member (37) with respect to a vertical direction, wherein a sealing edge (55) for cooperating in sealing with the sealing surface (27) of the lower part (19) of the sealing tool is provided at the lower inner member (39),
wherein a pressure chamber (41) bounded by a diaphragm (43) at its bottom is formed in the upper inner member (37), the lower inner member (39) being pressed against the diaphragm (43) in the sealing position so that a sealing pressure is applied.

2. The sealing tool according to claim 1, further comprising a pressure regulator (45) configured to set the pressure in the pressure chamber (41).

3. The sealing tool according to claim 1 or 2, wherein the upper inner member (37) is stationary.

4. The sealing tool according to any one of the preceding claims, wherein the lower inner member (39) is guided for movement relative to the upper inner member (37) along the vertical direction with play, if necessary.

5. The sealing tool according to any one of the preceding claims, wherein the lower inner member (39) is free to perform a tilting movement at least within a limited angular range.

6. The sealing tool according to any one of the preceding claims, wherein the lower inner member (39) comprises a head element (39a) at least partially received in a receiving chamber (51) located in the upper inner member (37) below the pressure chamber (41).

7. The sealing tool according to claim 6, wherein the head element (39a) of the lower inner member (39) is substantially mushroom-shaped, wherein a stem portion (47) of the head element (39a) protrudes from the receiving chamber (51) through a an opening directed downwards, and a head portion (49) of the head element (39a) which is wider than the stem portion (47) is retained in the receiving chamber (51) by walls of the receiving chamber (51) delimiting the opening.

8. The sealing tool according to claim 6 or 7, wherein the lower inner member (39) further comprises an intermediate element (39b) arranged below the head element (39a) and an end element (39c) arranged below the intermediate element (39b) and comprising the sealing edge (55), the head member, the intermediate element (39b) and the end element (39c) being movable relative to each other with respect to the vertical direction.

9. The sealing tool of claim 8, wherein a cutting blade (53) is provided on the lower inner member (39) for cutting the package along a contour of the package during the sealing.

10. The sealing tool according to claim 9, wherein a respective guide member (69) is provided only at discrete positions along a circumference of the cutting blade (53) between an inner side of the cutting blade (53) and the inner member (35).

11. The sealing tool according to claim 9 or 10, wherein the cutting blade (53) or the end element (39c) can be moved upwards towards the intermediate element (39b) against a clamping member (57, 71).

12. The sealing tool according to any one of the preceding claims, wherein a respective guide element (65) is provided only at discrete positions along a circumference of the upper part (17) of the sealing tool between an inner wall of the outer member (29) and the inner member (35), wherein preferably the guide elements (65) guide the inner member (35) with play relative to the outer member (29).

13. The sealing tool according to any one of the preceding claims, wherein the outer member (29) of the upper part (17) of the sealing tool and the lower part (19) of the sealing tool are configured to form a closed chamber, inside which the inner member (35) of the upper part (17) of the sealing tool is located.

14. A packaging machine (1) having one or more sealing tools (5) according to any one of the preceding claims, wherein, when a plurality of sealing tools (5) is provided, the pressure chambers (41) of the sealing tools (5) are connected to each other, so that pressure is equalized between the pressure chambers (41).

15. A method for packaging products using a sealing tool (5) according to any one of claims 1 to 13 or a packaging machine (1) according to claim 14, comprising:
introducing a first packaging member (9) and a second packaging member (21) between the lower part (19) of the sealing tool and the upper part (17) of the sealing tool in the receiving position;
moving the lower part (19) of the sealing tool from the receiving position into the sealing position by means of the lifting drive (59), wherein the lower part (19) of the sealing tool initially moves to abut against the outer member (29) of the upper part (17) of the sealing tool and pushes it vertically upwards against a bias, then the lower part (19) of sealing tool moves to abut against the lower inner member (35) of the upper part (17) of the sealing tool and presses it against the diaphragm (43) delimiting the pressure chamber (41) at its bottom.

16. The method according to claim 15, wherein after reaching the sealing position the pressure in the pressure chamber (41) is actively increased.

## Revendications

1. Outil de scellage (5) pour fermer un emballage en reliant de manière étanche une première partie d'emballage (9) à une seconde partie d'emballage (21), comprenant :
une partie supérieure d'outil de scellage (17) ayant une partie extérieure (29) et une partie intérieure (35) agencées dans la partie extérieure (29), la partie extérieure (29) étant mobile par rapport à la partie intérieure (35) dans une direction verticale ;
une partie inférieure d'outil de scellage (19) agencée au-dessous de la partie supérieure d'outil de scellage (17) et ayant une surface de scellage (27) ; et
un entraînement de levage (59) qui est configuré pour déplacer la partie inférieure d'outil de scellage (19) le long d'une direction verticale depuis une position de réception, dans laquelle la première partie d'emballage (9) et la seconde partie d'emballage (21) peuvent être insérées entre la partie inférieure d'outil de scellage (19) et la partie supérieure d'outil de scellage (17), vers une position de scellage pour relier la première partie d'emballage (9) à la seconde partie d'emballage (21) par coopération de la partie inférieure d'outil de scellage (19) et de la partie supérieure d'outil de scellage (17),
**caractérisé en ce que**
la partie intérieure (35) de la partie supérieure d'outil de scellage (17) comprend une partie intérieure supérieure (37) et une partie intérieure inférieure (39) qui est mobile par rapport à la partie intérieure supérieure (37) dans une direction verticale, dans lequel un bord de scellage (55) est prévu sur la partie intérieure inférieure (39) pour une coopération de scellage avec la surface de scellage (27) de la partie inférieure d'outil de scellage (19),
dans lequel une chambre de pression (41) est formée dans la partie intérieure supérieure (37) et est délimitée vers le bas par une membrane (43), dans lequel la partie intérieure inférieure (39) est pressée contre la membrane (43) dans la position de scellage, de sorte qu'une pression de scellage est appliquée.

2. Outil de scellage selon la revendication 1, comprenant en outre un régulateur de pression (45) qui est configuré pour ajuster la pression dans la chambre de pression (41).

3. Outil de scellage selon la revendication 1 ou 2, dans lequel la partie intérieure supérieure (37) est fixe.

4. Outil de scellage selon l'une quelconque des revendications précédentes, dans lequel la partie intérieure inférieure (39) est guidée éventuellement avec un jeu pour le déplacement le long de la direction verticale par rapport à la partie intérieure supérieure (37).

5. Outil de scellage selon l'une quelconque des revendications précédentes, **caractérisé en ce que** la partie intérieure inférieure (39) peut être soumise à un mouvement de bascule au moins dans une zone angulaire délimitée.

6. Outil de scellage selon l'une quelconque des revendications précédentes, dans lequel la partie intérieure inférieure (39) comprend un élément de tête (39a) qui est au moins partiellement reçu dans une chambre de réception (51) qui est située dans la partie intérieure supérieure (37) en dessous de la chambre de pression (41).

7. Outil de scellage selon la revendication 6, dans lequel l'élément de tête (39a) de la partie intérieure inférieure (39) est réalisé sensiblement en forme de champignon, une zone de tige (47) de l'élément de tête (39a) faisant saillie hors de la chambre de réception (51) à travers une ouverture dirigée vers le bas, et une zone de tête (49) de l'élément de tête (39a), élargie par rapport à la zone de tige (47), étant maintenue dans la chambre de réception (51) par des parois de la chambre de réception (51) délimitant l'ouverture.

8. Outil de scellage selon la revendication 6 ou 7, dans lequel ladite partie intérieure inférieure (39) comprend en outre un élément intermédiaire (39b) agencé sous ledit élément de tête (39a) et un élément d'extrémité (39c) agencé sous ledit élément intermédiaire (39b) et qui comprend ledit bord de scellage (55), ledit élément de tête, ledit élément intermédiaire (39b) et ledit élément d'extrémité (39c) étant mobiles les uns par rapport aux autres dans ladite direction verticale.

9. Outil de scellage selon la revendication 8, dans lequel une lame de coupe (53) est prévue sur la partie intérieure inférieure (39) pour couper l'emballage le long d'un contour d'emballage pendant le scellage.

10. Outil de scellage selon la revendication 9, dans lequel un élément de guidage (69) est prévu entre un côté intérieur de la lame de coupe (53) et la partie intérieure (35) uniquement dans des positions individuelles le long d'une circonférence de la lame de coupe (53).

11. Outil de scellage selon la revendication 9 ou 10, dans lequel la lame de coupe (53) ou l'élément d'extrémité (39c) peut être déplacé vers le haut en direction de l'élément intermédiaire (39b) contre un élément de serrage (57, 71).

12. Outil de scellage selon l'une quelconque des revendications précédentes, dans lequel un élément de guidage (65) est prévu entre une paroi intérieure de la partie extérieure (29) et la partie intérieure (35) uniquement dans des positions individuelles le long d'une périphérie de la partie supérieure d'outil de scellage (17), les éléments de guidage (65) guidant de préférence la partie intérieure (35) avec un jeu par rapport à la partie extérieure (29).

13. Outil de scellage selon l'une quelconque des revendications précédentes, dans lequel la partie extérieure (29) de la partie supérieure d'outil de scellage (17) et la partie inférieure d'outil de scellage (19) sont configurées pour former une chambre fermée à l'intérieur de laquelle se trouve la partie intérieure (35) de la partie supérieure d'outil de scellage (17).

14. Machine d'emballage (1) avec un ou plusieurs outils de scellage (5) selon l'une quelconque des revendications précédentes, dans laquelle les chambres de pression (41) des outils de scellage (5) sont reliées les unes aux autres dans le cas d'une pluralité d'outils de scellage (5), de sorte qu'une compensation de pression a lieu entre les chambres de pression (41).

15. Procédé pour emballer des produits avec un outil de scellage (5) selon l'une des revendications 1 à 13 ou avec une machine d'emballage (1) selon la revendication 14, comprenant :
une insertion d'une première partie d'emballage (9) et d'une seconde partie d'emballage (21) entre la partie inférieure d'outil de scellage (19) et la partie supérieure d'outil de scellage (17) dans la position de réception ;
un déplacement de la partie inférieure d'outil de scellage (19) de la position de réception à la position de scellage au moyen de l'entraînement de levage (59), la partie inférieure d'outil de scellage (19) se déplaçant d'abord contre la partie extérieure (29) de la partie supérieure d'outil de scellage (17) et poussant celle-ci verticalement vers le haut à l'encontre d'une précontrainte, puis la partie inférieure d'outil de scellage (19) se déplaçant contre la partie intérieure inférieure (35) de la partie supérieure d'outil de scellage (17) et pressant celle-ci contre la membrane (43) délimitant la chambre de pression (41) vers le bas.

16. Procédé selon la revendication 15, dans lequel, après avoir atteint la position de scellage, la pression dans la chambre de pression (41) est augmentée de manière active.
